# NEW EUROPEAN PATENT SPECIFICATION

(11) **EP 1 971 653 B2**
(45) Date of publication and mention of the opposition decision: **29.10.2014**
(45) Mention of the grant of the patent: 17.03.2010
(21) Application number: 06839366.9
(22) Date of filing: 13.12.2006
(51) Int. Cl.: C09D 167/00

(54) **LOW GLOSS COIL POWDER COATING COMPOSITION FOR COIL COATING**
GLANZARMER PULVERLACK FÜR COILCOATING
COMPOSITION DE REVETEMENT DE BOBINE SOUS FORME DE POUDRE DE FAIBLE BRILLANCE POUR REVETEMENT DE BOBINES

(30) Priority: 15.12.2005 EP 05292704
(43) Date of publication of application: 24.09.2008
(73) Proprietor: Coatings Foreign IP Co. LLC, Wilmington, DE 19801 (US)
(72) Inventor: FUGIER, Roger, F-42600 Montbrison (FR); BERGER, Vincent, F-42290 Sorbiers (FR)
(74) Representative: Maiwald Patentanwalts GmbH
(86) International application number: PCT/US2006/047630
(87) International publication number: WO 2007/070608

(56) References cited:
- EP-A- 0 244 823
- EP-A- 0 383 601
- EP-A- 0 870 808
- EP-A- 1 057 875
- FR-A- 2 457 884
- KR-A- 20000 047 292
- US-A- 3 842 035
- US-A- 4 463 140
- US-A- 5 457 168
- US-A1- 2002 032 275
- US-A1- 2003 100 678
- US-A1- 2003 153 640
- US-A1- 2004 071 955
- US-A1- 2005 090 627
- US-B1- 6 406 757
- US-B1- 6 624 259
- DATABASE WPI Section Ch, Week 198649 Derwent Publications Ltd., London, GB; Class A23, AN 1986-321546 XP002268007 & JP 61 236868 A (NIPPON OILS & FATS CO LTD) 22 October 1986 (1986-10-22)
- DATABASE WPI Section Ch, Week 198541 Derwent Publications Ltd., London, GB; Class A14, AN 1985-253580 XP002268006 & JP 60 168771 A (NIPPON OILS & FATS CO LTD) 2 September 1985 (1985-09-02)
- DATABASE WPI Section Ch, Week 197917 Derwent Publications Ltd., London, GB; Class A14, AN 1979-32542B XP002268005 & JP 54 036339 A (KANSAI PAINT CO LTD) 17 March 1979 (1979-03-17)
- DATABASE WPI Section Ch, Week 200340 Derwent Publications Ltd., London, GB; Class A23, AN 2003-427549 XP002379096 & KR 2002 053 470 A (KUMKANG KOREA CHEM CO LTD) 5 July 2002 (2002-07-05)
- 'Kirk Othmer Encyclopaedia of Chemical Technology', vol. 7, 16 November 2001, JOHN WILEY & SONS, INC. deel 'Coating Processes, Powder', pages 35 - 68

## Description

### Field of the Invention

The present invention is directed to a powder coating composition providing a gloss-controlled coating which is suitable for coil coating of substrate surfaces, which is a significant improvement over the systems currently employed in that they present health advantages.

### Description of Prior Art

Coil coating of substrates is a process of coating strips or sheets of, e.g., metal that are in the shape of coils, with liquid or powder coating compositions. In general, such coils are being un-wound, and are cleaned or pre-treated, then coated, cured in an oven, cooled down and are wounded again. This process proceeds under high speed, e.g. at coating speeds of, for example, > 50 m/min.

Powder coating compositions are being used more and more for that kind of coating process. Especially thermosetting powder compositions are used based on polyesters as binder resin and typical curing agents such as solid polyepoxides, for example triglycidyl isocyanurate (TGIC).

The polyester/TGIC system gives coatings with good properties for outdoor use, especially for the coating of metal substrates such as weather durability and chemical resistance as well as fast curing of the coating and flexibility of the cured coating.

The problem arising with these systems is the high toxicity of TGIC, a product of mutagenic character apart from being irritant to the skin and the mucosae, toxic on inhalation, and the like. This compels the introduction of robust safety measures from the standpoint of the health of the workforce, the personnel having to be appropriately protected and to submit to the appropriate medical checks, thereby entailing substantial costs in addition to the already high cost of TGIC.

Accordingly, there is a need to replace this polyester resin/TGIC system by other, less harmful and globally less expensive systems.

There are numerous patents in which the use of organic peroxides as curing initiator or agent is described for different types of resins, e.g. JP 49128939, JP 49040348, JP 55025462, DE2332749, JP 54150440, JP 55027307, JP 56100870, JP 55003416, JP 54158440, JP 52150443, JP 49129725, JP-04/227713 and JP 49093425. Such formulations are not suitable for coil coating processes.

In the article "Rund um TGIC-freie Pulverlacke" (Th. Brock, Farbe & Lack, volume 106, 2/2 000, pages 38 to 44) alternatives of TGIC substitutes are named such as polyurethanes, anhydrides + glycidylmethacrylate and hydroxyl alkyl amides. The TGIC-free powder coats may have good coating properties but show difficulties regarding weather resistance, generating pinholes and problems regarding balance of flow and sagging properties, low storage stability.

The use of matting agents to adjust the gloss to a desired level is well known, see WO 03/102048, U.S. 2003/0134978, EP-A 1129788 and EP-A 0947254. Examples for such agents are waxes, silica, glass pearls, and crystalline resins. Such compositions often lead to coatings with a loss in technological properties.

Another technique for forming a matting effect is the use of dry-blends of chemically incompatible powders. However, these processes often provide no coatings with high performed properties whereby the coatings can be applied by coil coating methods at the same time.

There is a need to provide coating compositions suitable for coil coating applications which overcome the drawbacks of toxicity presented by TGIC, and of disadvantages presented by the TGIC alternatives, which may be cured at a short time and which result in gloss-controlled coatings.

### Summary of the Invention

The present invention provides a powder coating composition obtainable by homogeneous mixing of at least two separately produced powder coating compositions as powder coating bases comprising
(A) 5 to 95 wt% of at least one powder coating base prepared from one or more saturated carboxylic functional polyester resin having an acid value in the range of 5 to 25 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigments and/or filler, and
(B) 95 to 5 wt% of at least one powder coating base prepared from one or more saturated carboxylic functional polyester resin having an acid value in the range of >25 to 100 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigment and/or filler,
the wt% being based on the total weight of the powder coating composition.

In spite of substitution of TGIC, the powder coating composition of this invention are coating compositions having a good storage stability and giving coatings with any desired gloss level as well as good coating properties, particularly, high exterior durability and stable flexibility. Surprisingly the disadvantages caused by the known TGIC substitutes such as pinholes and gassing of the coating may be prevented. The composition of the invention fulfills the requirements of health and safety classification in Europe, e.g. is not classified as "Toxic" according to the European Chemicals Regulations in particular with the phrase R46 (R46 phrases: May cause heritable genetic damage).

The powder coating composition according to the invention is especially suitable for the coil coating technology, that means, for coating applications also under high speed, e.g. at coating speeds of about > 50 m/min providing coatings with a high flexibility for post forming.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges of numerical values can be used to achieve substantially the same results as values within the ranges. Also, the disclosure of these ranges is intended as a continuous range including every value between the minimum and maximum values.

All patents, patent applications and publications referred to herein are incorporated by reference in their entirety.

Suitable polyesters of component A) are saturated carboxylic functional polyester resins having an acid value in the range of 5 to 25, preferably in the range of 15 to 25.

Suitable polyesters of component B) are saturated carboxylic functional polyester resins having an acid value in the range of >25 to 100, preferably in the range of 28 to 60.

The acid value is defined as the number of mg of potassium hydroxide (KOH) required to neutralise the carboxylic groups of 1 g of the resin.

The polyesters may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable alcohols are benzyl alcohol, butanediol, hexanediol, ethylene glycol, diethylene glycol, pentaerytritol, neopentyl glycol, propylene glycol, and mixtures thereof.

The saturated carboxyl group containing polyesters may be used together with small amounts of hydroxyl group containing polyesters, for example 0 to 10 wt% of hydroxyl group containing polyesters having a hydroxy value of, for example, 10 to 200.

Preferred is the use of saturated carboxyl-functionalized polyesters without any addition of hydroxyl group containing polyesters.

The saturated carboxyl group containing polyesters may have a glass transition temperature Tg in a range of, e.g., 35 to 80°C, preferably 50 to 75, Tg determined by means of differential scanning calorimetry (DSC). The number average molecular weight Mn of the resins is in the range of, e.g., 2 000 to 10 000, Mn determined from gel permeation chromatography (GPC) using polystyrene standard.

Crystalline and/or semi-crystalline saturated carboxylic functional polyesters are also usable which have a Tm (melting temperature) in the range of e.g., 50 to 150°C, determined by means of DSC.

The polyesters of the invention can also be partially self cross-linkable polyesters containing cross-linkable functional groups known by a person skilled in the art.

Glycidylesters and/or glycidylethers may be used as hardeners in component A) and component B) selected from the group consisting of polyglycidyl ethers based on aliphatic or cycloaliphatic epoxy resins, TML and DGT. Preferred is the use of TML. and DGT in solid form.

Polyglycidyl ethers based on aliphatic or cycloaliphatic epoxy resins can be used which are known in the powder coating area.

The hardeners of the invention may be used together with small amounts of other suitable hardeners known by the person skilled in the art, for example, blocked polyisocyates such as, e.g. aliphatic diisocyanates, for example, in quantities in the range of 0 to 10 wt%.

The content of the polyester resin in component A) and in component B) may be in a range, for example, between 40 wt% and 95 wt%, preferably in the range of 50 wt% to 90 wt%.

The content of the hardener in component A) and in component B) may be, for example, in a range between 2 wt% and 30 wt%, preferably in the range of 3 to 20 wt%.

The powder coating base of A) and of B) may contain as further components the constituents conventional in powder coating technology, such as additives, pigments and/or fillers as known by a person skilled in the art.

Additives are, for example, degassing auxiliaries, flow-control agents, flatting agents, texturing agents, fillers (extenders), catalysts, dyes, anti-oxidant, anti-UV, tribostatic or corona electrostatic charging auxiliaries. Compounds having antimicrobial activity may also be added to the powder coating compositions.

The crosslinking reaction may be additionally accelerated by the presence in the powder coating composition according to the invention of catalysts known from thermal crosslinking. Such catalysts are, for example, tin salts, phosphides, amines, ammonium salts, cyclic amidines, phosphonium salts, alkyl- or aryl- imidazolines, and amides. They may be used, for example, in quantities of 0.02 to 3 wt%, based on the total weight of each powder coating base.

The powder coating base A) and B) may contain transparent, color-imparting and/or special effect-imparting pigments and/or fillers (extenders). Suitable color-imparting pigments are any conventional coating pigments of an organic or inorganic nature. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminum, copper or other metals, interference pigments, such as, metal oxide coated metal pigments and coated mica. Examples of usable extenders are silicon dioxide, aluminum silicate, barium sulfate, and calcium or magnesium carbonate, micronized dolomite.

The constituents are used in conventional amounts known to the person skilled in the art, for example, based on the total weight of each powder coating base, regarding pigments and/or fillers in quantities of 0 to 40 wt.%, preferred 0 to 35 wt%, regarding the additives in quantities of 0.01 to 5%, preferred 1 to 3 wt%.

The powder coating base of A) and of B) are separately prepared by conventional manufacturing techniques used in the powder coating industry, such as, extrusion and/or grinding processes.

For example, the ingredients of each powder coating base can be blended together and heated to a temperature to melt the mixture, and then the mixture is extruded. In the extruder the mixture is melted and homogenised, a dispersion of pigments is ensured by shearing effect. The extruded material is then cooled on chill roles, broken up and ground to a fine powder, which can be classified to the desired grain size, for example, to a median particle size of 20 to 200 µm, preferred 20 to 50 µm.

Each powder coating base may also be prepared by spraying from supercritical solutions, NAD "non-aqueous dispersion" processes or ultrasonic standing wave atomization process.

Furthermore, specific components of the powder coating base according to the invention, for example, additives, pigment, fillers, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g. the glass transition temperature Tg of the composition, in a range, of e.g., 50 to 60°C. After cooling the mixture the desired particle size of the resulted particles may be proceed by a sieving process.

The powder coating base of component A) and the powder coating base of component B) may be mixed together in a mixing ratio of component A) to component B) of 5: 95 to 95: 5, relative to weight of the total composition of (A) and (B). Preferably a powder coating composition according to the invention is used comprising 45 to 70 wt% of the powder coating base A) and 55 to 30 wt% of the powder coating base B).

The powder coating composition according to the invention may provide powder coatings with a low or medium gloss level. Therefore this invention provides also a process for preparation of powder coatings with a controlled gloss level.

The gloss level (value) of finishes according to this invention is measured at 60° angle according to EN ISO 2813:1999 and can be adjusted in the range of 1 to 95 gloss units (GU) by using the composition according to the invention. Typically, a low gloss (matt finish) has a gloss in the range of 10 to 30 GU and a medium gloss finish in the range of 30 to 70 GU.

The present invention also provides a process, in which a powder coating composition comprising
(A) 5 to 95 wt% of at least one powder coating base prepared from one or more saturated carboxylic functional polyester resin having an acid value in the range of 5 to 25 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigments and/or filler, and
(B) 95 to 5 wt% of at least one powder coating base prepared from one or more saturated carboxylic functional polyester resin having an acid value in the range of >25 to 100 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigment and/or filler,
the wt% being based on the total weight of the powder coating composition, is produced in such a manner that component A) and component B) are initially produced separately using conventional powder coating production processes, and the two components A) and B) in the stated mixing ratio are then subjected to a further operation, for example an extrusion operation, to ensure homogeneous mixing of the two components.

The powder coating composition of this invention may be applied by, e.g., electrostatic spraying, thermal or flame spraying, or fluidized bed coating methods, all of which are known to those skilled in the art.

The powder coating composition according to the invention is especially suitable for the coil coating technique at coating speeds of, for example, 5 to 50 m/min, also for high speed coating, at coating speeds of, for example, > 50 m/min.

Coil coating techniques such as cloud technology generated by rotating brush and electromagnetic brush technology (EMB) as well as other known application techniques like corona or tribostatic sprayer guns or rotative bells projectors are examples for the application by coil coating procedure as known by a person skilled in the art. For example, the metal sheets or strips may be disposed on a horizontal conveyor during coil coating.

The coating compositions may be applied to, e.g., metallic substrates, non-metallic substrates, such as, paper, wood, plastics, glass and ceramics, as a onecoating system or as coating layer in a multi-layer film build. In certain applications, the substrate to be coated may be pre-heated before the application of the powder composition, and then either heated after the application of the powder or not. For example, gas is commonly used for various heating steps, but other methods, e.g., microwaves, conduction methods, Infrared (IR) radiation, near infrared (NIR) radiation, electrical induction heating are also known. Catalytic gas infrared ovens and electric infrared oven are commonly used, frequently coupled with gas convection ovens.

The powder coating compositions according to the invention can be applied directly on the substrate surface or on a layer of a primer which can be a liquid or a powder based primer. The powder coating compositions according to the invention can also be applied as a coating layer of a multilayer coating system based on liquid or powder coats, for example, based on a powder or liquid clear coat layer applied onto a color-imparting and/or special effect-imparting base coat layer or a pigmented one-layer powder or liquid top coat applied onto a prior coating.

The applied and melted powder coating layer can be cured by thermal energy. The coating layer may, for example, be exposed by convective, gas and/or radiant heating, e.g., infra red (IR) and/or near infra red (NIR) irradiation, as known in the art, to temperatures of, e.g., 100°C to 300°C, preferably of 180°C to 280°C (object temperature in each case).

If the composition according to the invention is used together with unsaturated resins and, optionally photo-initiators or with unsaturated resin containing powders, dual curing may also be used. Dual curing means a curing method of the powder coating composition according to the invention where the applied composition can be cured, e.g., both by high energy radiation such as, e.g. ultra violet (UV) irradiation, and by thermal curing methods known by a skilled person.

The present invention is further defined in the following Examples. It should be understood that these Examples are given by way of illustration only. From the above discussion and these Examples, one skilled in the art can ascertain the essential characteristics of this invention, and without departing from the spirit and scope thereof, can make various changes and modifications of the invention to adapt it to various uses and conditions. As a result, the present invention is not limited by the illustrative examples set forth herein below, but rather is defined by the claims contained herein below.

The following Examples illustrate the invention.

### Examples

### Example 1

### Manufacture of a Powder Coating Composition and Application

A powder coating composition according to the invention (Formulation 1) is prepared according to the following ingredients:

**Formulation 1**

| **Component A** | **Weight** **%** | **Component B** | **Weight** **%** |
|---|---|---|---|
| Crylcoat 2432 (COOH- polyester, acid value: 20) | 60,5 | Crylcoat 2514 (COOH- polyester, acid value: 47) | 43,0 |
| Araldite PT 912 (mixture of TML and DGT) | 4,0 | COOH-polyester, acid value: 28) | 13,5 |
| Resiflow PV88 (flow agent) | 1,0 | Araldite PT 912 | 7,4 |
| 2-Phenyl imidazoline | 0,9 | Resiflow PV88: flow agent | 1,0 |
| Benzoin | 0,5 | Benzoin | 0,5 |
| TiPure R706: Titanium dioxide | 32,5 | Accelerator DT3126 (masterbatch of quaternary ammonium salt in polyester resin) | 2,2 |
| Carbon black in 1% mixture with barium sulfate | 0,6 | TiPure R706 | 31,8 |
| | | Carbon black in 1% mixture with barium sulfate | 0,6 |

The ingredients of each component A) and of each component B) are separately mixed together and separately extruded in an extruder PR 46 (firm: Buss AG) at 120°C. The melt-mixed formulation is cooled and the resulted material is separately ground to a D50 value of 35 µm particle size distribution.

The final powder composition is resulted by mixing of 50 wt% of component A) and 50 wt% of component B to ensure homogeneous mixing.

The final powder composition is applied to 1-mm thick steel sheet using the coil coating technology at a coil coating speed of about 40 m/min and cured by medium wave infrared electric emitters adjusted in such a way that the coated surface temperature increases from room temperature to 200 °C in 60 seconds (s) and from 200 to 255 °C in 45 s. The total heating time is 105 seconds and the cooling time is 30s by cool air. The resulted film thickness is of 70 µm.

### Example 2

### Testing of the Coating

**Table 1**

| | | | | |
|---|---|---|---|---|
| **Test** | **Exterior durability** (45° vertical, South Direction, after 2 years) | **Flexibility (Post forming)** ECCA T7 1996 | **Gassing** (Pinholes, observation) | **Gloss** NF EN ISO 2813 |
| **Result** | More than 80% gloss retention, Less than 0,2 ΔL*, ΔC*<0,2 | O-T bend without cracks after 6 months storage at room temperature | No pinholes | 30 GU |

### Exterior durability:

The coated panel is exposed at 45° tilt angle relative to the vertical direction and it faces the south for maximum exposition to sun light during 2 years.

The he difference between colour L* value after and before light exposition is 0,2 units CIELab. L* is the official designation of the lightness coordinate in the CIEielab system. The star after the L: L* has been added to signal a slight difference from old L value in the mode of calculation. The ΔL*= L*value after test - L*value before test = 0,2 Cielab units represents the whitening effect happened during the ageing.

### Flexibility:

The bending test is done by folding a panel like folding a sheet of paper to get half size, but using a press instead of hands.

### Gloss:

GU means Gloss Unit. It's a conventional number of the energy of light measured after reflexion on the coated panel.

The test results show very good results regarding durability, flexibility and gloss and no pinholes after coil coating under higher,speed.

## Claims

1. A powder coating composition comprising
(A) 5 to 95 wt% of at least one powder coating base prepared from one or more saturated carboxylic functional polyester resin having an acid value in the range of 5 to 25 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigments and/or filler, and
(B) 95 to 5 wt% of at least one powder coating base prepared from one or more saturated carboxylic functional polyester resin having an acid value in the range of >25 to 100 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigment and/or filler,
the wt% being based on the total weight of the powder coating composition, wherein said powder coating composition is obtainable by initially producing the two components A) and B) separately and then subjecting to a further operation to ensure homogeneous mixing of the two components.

2. The powder coating composition of claim 1 comprising 45 to 70 wt% of the powder coating base A) and 55 to 30 wt% of the powder coating base B).

3. The powder coating composition of claims 1 and 2 wherein the saturated carboxylic functional polyester resin of component A) has an acid value in the range of 15 to 25 mg KOH/g, and the saturated carboxylic functional polyester resin of component B) has an acid value in the range of 28 to 60 mg KOH/g.

4. The powder coating composition of claims 1 and 2 wherein, the saturated carboxylic functional polyester resin of component A) and B) has a glass transition temperature Tg in a range of 50 to 75, Tg determined by means of differential scanning calorimetry (DSC).

5. The powder coating composition of claims 1 to 3 wherein the saturated carboxylic functional polyester resin of component A) and B) has a number average molecular weight Mn in the range of 2 000 to 10 000, Mn determined from gel permeation chromatography (GPC) using polystyrene standard.

6. The powder coating composition of claims 1 to 4 wherein TML and DGT are used as hardeners.

7. The powder coating composition of claims 1 to 5 wherein the content of the polyester resin in component A) and in component B) is in a range between 40 wt% and 95 wt%.

8. The powder coating composition of claims 1 to 6 wherein the content of the hardener in component A) and in component B) is in a range between 2 wt% and 30 wt%.

9. A process for the preparation of a powder coating composition comprising
(A) 5 to 95 wt% of at least one powder coating base prepared from one or more saturated carboxylic functional polyester resin having an acid value in the range of 5 to 25 mg KOH/g, and from one or more glycidylester and/or glycidylether as hardener selected from the group consisting of triglycidyl trimellitate (TML), diglycidyl terephthalate (DGT) and glycidyl ethers based on aliphatic or cycloaliphatic epoxy resins, together with at least one coating additive, and optionally pigments and/or filler, and
(B) 95 to 5 wt% of at least one powder coating base prepared from one or more saturated carboxylic functional polyester resin having an acid value in the range of >25 to 100 mg KOH/g, and from one or more glycidylester and/or glycidylether as hardener selected from the group consisting oftriglycidyl trimellitate (TML), diglycidyl terephthalate (DGT) and glycidyl ethers based on aliphatic or cycloaliphatic epoxy resins, together with at least one coating additive, and optionally pigment and/or filler,
the wt% being based on the total weight of the powder coating composition,
wherein component A) and component B) are initially produced separately and the two components A) and B) are then subjected to a further operation to ensure homogeneous mixing of the two components.

10. A process for the preparation of powder coatings with a controlled gloss level using the powder coating composition of claims 1 to 8.

11. The process of claim 10 using coil coating techniques.

12. The process of claim 11 wherein a coil coating technique is used under high speed of >50 m/min.

13. The process of claims 10 to 12 wherein the gloss level of the coatings is in the range of low to medium gloss.

14. A substrate surface coated by the powder coating composition according to claims 1 to 8 and cured the composition.

15. The substrate surface according to claim 14 wherein the substrate is from metal.

## Patentansprüche

1. Pulverbeschichtungszusammensetzung umfassend
(A) 5 bis 95 Gew.-% mindestens einer Pulverbeschichtungsgrundierung, die aus einem oder mehreren gesättigten carbonsäurefunktionellen Polyesterharzen, die einen Säurewert im Bereich von 5 bis 25 mg KOH/g aufweisen, und aus einem oder mehreren Glycidylestem und/oder Glycidylethern als Härter hergestellt wird, der aus der Gruppe ausgewählt wird bestehend aus Triglycidyltrimellitat (TML), Diglycidylterephthalat (DGT) und Glycidylethern auf der Basis aliphatischer oder cycloaliphatischer Epoxidharze zusammen mit einem Beschichtungszusatzmittel und wahlweise Pigmenten und/oder Füllstoff und
(B) 95 bis 5 Gew.-% mindestens einer Pulverbeschichtungsgrundierung, die aus einem oder mehreren gesättigten carbonsäurefunktionellen Polyesterharzen, die einen Säurewert im Bereich von > 25 bis 100 mg KOH/g aufweisen, und aus einem oder mehreren Glycidylestern und/oder Glycidylethern als Härter hergestellt wird, der aus der Gruppe ausgewählt wird bestehend aus Triglycidyltrimellitat (TML), Diglycidylterephthalat (DGT) und Glycidylethern auf der Basis aliphatischer oder cycloaliphatischer Epoxidharze zusammen mit einem Beschichtungszusatzmittel und wahlweise Pigment und/oder Füllstoff,
wobei der Gewichtsprozentsatz sich auf das Gesamtgewicht der . Pulverbeschichtungszusammensetzung bezieht, wobei die Pulverbeschichtungszusammensetzung durch anfängliches Herstellen der beiden Komponenten A) und B) getrennt voneinander und dann Unterwerfen einem weiteren Arbeitsgang, um das homogene Mischen der beiden Komponenten sicherzustellen, erhältlich ist.

2. Pulverbeschichtungszusammensetzung nach Anspruch 1, umfassend 45 bis 70 Gew.-% der Pulverbeschichtungsgrundierung A) und 55 bis 30 Gew.-% der Pulverbeschichtungsgrundierung B).

3. Pulverbeschichtungszusammensetzung nach Anspruch 1 und 2, wobei das gesättigte carbonsäurefunktionelle Polyesterharz der Komponente A) einen Säurewert im Bereich von 5 bis 25 mg KOH/g aufweist und das gesättigte carbonsäurefunktionelle Polyesterharz der Komponente B) einen Säurewert im Bereich von 28 bis 60 mg KOH/g aufweist.

4. Pulverbeschichtungszusammensetzung nach Anspruch 1 und 2, wobei das gesättigte carbonsäurefunktionelle Polyesterharz der Komponente A) und B) eine Glasübergangstemperatur Tg im Bereich von 50 bis 75 aufweist, wobei die Tg durch Differential-Scanning-Kalorimetrie (DSC) bestimmt wird.

5. Pulverbeschichtungszusammensetzung nach Anspruch 1 bis 3, wobei das gesättigte carbonsäurefunktionelle Polyesterharz der Komponente A) und B) ein zahlendurchschnittliches Molekulargewicht Mn im Bereich von 2.000 bis 10.000 aufweist, wobei Mn durch Gelpermeationschromatographie (GPC) unter Anwendung des Polystyrolstandards bestimmt wird.

6. Pulverbeschichtungszusammensetzung nach Anspruch 1 bis 4, wobei TML und DGT als Härter verwendet werden.

7. Pulverbeschichtungszusammensetzung nach den Ansprüchen 1 bis 5, wobei der Gehalt des Polyesterharzes in der Komponente A) und in der Komponente B) im Bereich zwischen 40 Gew.-% und 95 Gew.-% liegt.

8. Pulverbeschichtungszusammensetzung nach den Ansprüchen 1 bis 6, wobei der Gehalt des Härters in der Komponente A) und in der Komponente B) im Bereich zwischen 2 Gew.-% und 30 Gew.-% liegt.

9. Verfahren für die Herstellung einer Pulverbeschichtungszusammensetzung umfassend
(A) 5 bis 95 Gew.-% mindestens einer Pulverbeschichtungsgrundierung, die aus einem oder mehreren gesättigten carbonsäurefunktionellem Polyesterharz, das einen Säurewert im Bereich von 5 bis 25 mg KOH/g aufweist, und aus einem oder mehreren Glycidylestem und/oder Glycidylethern als Härter hergestellt werden der aus der Gruppe ausgewählt wird bestehend aus Triglycidyltrimellitat (TML), Diglycidylterephthalat (DGT) und Glycidylethern auf der Basis aliphatischer oder cycloaliphatischer Epoxidharze zusammen mit einem Beschichtungszusatzmittel und wahlweise Pigmenten und/oder Füllstoff und
(B) 95 bis 5 Gew.-% mindestens einer Pulverbeschichtungsgrundierung, die aus einem oder mehreren gesättigten carbonsäurefunktionellen Polyesterharzen, die einen Säurewert im Bereich von > 25 bis 100 mg KOH/g aufweist, und aus einem oder mehreren Glycidylestern und/oder Glycidylethern als Härter hergestellt werden der aus der Gruppe ausgewählt wird bestehend aus Triglycidyltrimellitat (TML), Diglycidylterephthalat (DGT) und Glycidylethern auf der Basis aliphatischer oder cycloaliphatischer Epoxidharze zusammen mit einem Beschichtungszusatzmittel und wahlweise Pigment und/oder Füllstoff,
wobei der Gewichtsprozentsatz sich auf das Gesamtgewicht der Pulverbeschichtungszusammensetzung bezieht,
wobei die Komponenten A) und die Komponente B) anfänglich getrennt voneinander hergestellt und die beiden Komponenten A) und B) dann einem weiteren Arbeitsgang unterworfen werden, um das homogene Mischen der beiden Komponenten sicherzustellen.

10. Verfahren für die Herstellung von Pulverbeschichtungen mit einem regulierten Glanzniveau unter Anwendung der Pulverbeschichtungszusammensetzung nach den Ansprüchen 1 bis 8.

11. Verfahren nach Anspruch 10 unter Anwendung von Bandlackiertechniken.

12. Verfahren nach Anspruch 11, wobei die Bandlackiertechnik bei hoher Geschwindigkeit von > 50 m/min eingesetzt wird.

13. Verfahren nach den Ansprüchen 10 bis 12, wobei das Glanzniveau der Beschichtungen im Bereich von geringem bis mittlerem Glanz liegt.

14. Substratoberfläche, die durch die Pulverbeschichtungszusammensetzung nach den Ansprüchen 1 bis 8 beschichtet und die Zusammensetzung ausgehärtet wird.

15. Substratoberfläche nach Anspruch 14, wobei das Substrat aus Metall besteht.

## Revendications

1. Composition de revêtement en poudre comprenant
(A) de 5 à 95 % en poids d'au moins une base de revêtement en poudre préparée à partir d'une ou plusieurs résines de polyester fonctionnel carboxylique saturé ayant un indice d'acidité compris dans la plage allant de 5 à 25 mg de KOH/g, et d'un ou plusieurs esters de glycidyle et/ou éthers glycidyliques, en tant qu'agent de durcissement, sélectionnés dans le groupe constitué par le trimellitate de triglycidyle (TML), le téréphtalate de diglycidyle (DGT) et les éthers glycidyliques à base de résines époxy aliphatiques ou cycloaliphatiques, avec au moins un additif de revêtement, et facultativement des pigments et/ou une charge, et
(B) de 95 à 5 % en poids d'au moins une base de revêtement en poudre préparée à partir d'une ou plusieurs résines de polyester fonctionnel carboxylique saturé ayant un indice d'acidité compris dans la plage allant de >25 à 100 mg de KOH/g, et d'un ou plusieurs esters de glycidyle et/ou éthers glycidyliques, en tant qu'agent de durcissement, sélectionnés dans le groupe constitué par le trimellitate de triglycidyle (TML), le téréphtalate de diglycidyle (DGT) et les éthers glycidyliques à base de résines époxy aliphatiques ou cycloaliphatiques, avec au moins un additif de revêtement, et facultativement un pigment et/ou une charge,
le % en poids étant basé sur le poids total de la composition de revêtement en poudre, dans laquelle ladite composition de revêtement en poudre peut être obtenue par production initiale des deux composants A) et B) séparément, puis leur soumission à au moins une autre opération pour assurer un mélange homogène des deux composants.

2. Composition de revêtement en poudre selon la revendication 1, comprenant de 45 à 70 % en poids de la base de revêtement en poudre A) et de 55 à 30 % en poids de la base de revêtement en poudre B).

3. Composition de revêtement en poudre selon les revendications 1 et 2, dans laquelle la résine de polyester fonctionnel carboxylique saturé du composant A) a un indice d'acidité compris dans la plage allant de 15 à 25 mg de KOH, et la résine de polyester fonctionnel carboxylique saturé du composant B) a un indice d'acidité compris dans la plage allant de 28 à 60 mg de KOH/g.

4. Composition de revêtement en poudre selon les revendications 1 et 2, dans laquelle la résine de polyester fonctionnel carboxylique saturé des composants A) et B) a une température de transition vitreuse Tg comprise dans la plage allant de 50 à 75, Tg étant déterminée par analyse calorimétrique à compensation de puissance (DSC).

5. Composition de revêtement en poudre selon les revendications 1 à 3, dans laquelle la résine de polyester fonctionnel carboxylique saturé des composants A) et B) a un poids moléculaire moyen en nombre Mn compris dans la plage allant de 2 000 à 10 000, Mn étant déterminé par chromatographie par perméation de gel (GPC) en utilisant du polystyrène comme référence.

6. Composition de revêtement en poudre selon les revendications 1 à 4, dans laquelle TML et DGT sont utilisés comme agents de durcissement.

7. Composition de revêtement en poudre selon les revendications 1 à 5, dans laquelle la teneur en résine de polyester dans le composant A) et dans le composant B) est comprise dans la plage allant de 40 % en poids à 95 % en poids.

8. Composition de revêtement en poudre selon les revendications 1 à 6, dans laquelle la teneur en agent de durcissement dans le composant A) et dans le composant B) est comprise dans la plage allant de 2 % en poids à 30 % en poids.

9. Procédé de préparation d'une composition de revêtement en poudre comprenant
(A) de 5 à 95 % en poids d'au moins une base de revêtement en poudre préparée à partir d'une ou plusieurs résines de polyester fonctionnel carboxylique saturé ayant un indice d'acidité compris dans la plage allant de 5 à 25 mg de KOH/g, et d'un ou plusieurs esters de glycidyle et/ou éthers glycidyliques, en tant qu'agent de durcissement, sélectionnés dans le groupe constitué par le trimellitate de triglycidyle (TML), le téréphtalate de diglycidyle (DGT) et les éthers glycidyliques à base de résines époxy aliphatiques ou cycloaliphatiques, avec au moins un additif de revêtement, et facultativement des pigments et/ou une charge, et
(B) de 95 à 5 % en poids d'au moins une base de revêtement en poudre préparée à partir d'une ou plusieurs résines de polyester fonctionnel carboxylique saturé ayant un indice d'acidité compris dans la plage allant de >25 à 100 mg de KOH/g, et d'un ou plusieurs esters de glycidyle et/ou éthers glycidyliques, en tant qu'agent de durcissement, sélectionnés dans le groupe constitué par le trimellitate de triglycidyle (TML), le téréphtalate de diglycidyle (DGT) et les éthers glycidyliques à base de résines époxy aliphatiques ou cycloaliphatiques, avec au moins un additif de revêtement, et facultativement un pigment et/ou une charge,
le % en poids étant basé sur le poids total de la composition de revêtement en poudre,
dans lequel le composant A) et le composant B) sont initialement produits séparément et les deux composants A) et B) sont ensuite soumis à au moins une opération pour assurer un mélange homogène des deux composants.

10. Procédé de préparation de revêtements en poudre avec un taux de brillance contrôlée en utilisant la composition de revêtement en poudre selon les revendications 1 à 8.

11. Procédé selon la revendication 10 utilisant des techniques de revêtement de bandes en continu.

12. Procédé selon la revendication 11, dans lequel une technique de revêtement de bandes en continu est utilisée à une vitesse élevée > 50 m/min.

13. Procédé selon les revendications 10 à 12, dans lequel le taux de brillance des revêtements est compris dans la plage allant d'une faible brillance à une brillance modérée.

14. Surface de substrat revêtue de la composition de revêtement en poudre selon les revendications 1 à 8 qui est durcie.

15. Surface de substrat selon la revendication 14, dans laquelle le substrat est en métal.
